# EUROPÄISCHE PATENTSCHRIFT

(11) **EP 3 139 044 B1**
(45) Veröffentlichungstag und Bekanntmachung des Hinweises auf die Patenterteilung: **22.04.2020**
(21) Anmeldenummer: 15183902.4
(22) Anmeldetag: 04.09.2015
(51) Int. Cl.: F04D 17/16, F04D 19/04, F04D 29/66, F16F 15/32, G01M 1/34

(54) **VERFAHREN ZUM WUCHTEN EINES ROTORS EINER VAKUUMPUMPE ODER EINES ROTORS EINER ROTATIONSEINHEIT FÜR EINE VAKUUMPUMPE**
METHOD FOR BALANCING A ROTOR OF A VACUUM PUMP OR A ROTOR OF A ROTARY UNIT FOR A VACUUM PUMP
PROCÉDÉ D'ÉQUILIBRAGE D'UN ROTOR D'UNE POMPE À VIDE OU D'UN ROTOR D'UNE UNITÉ DE ROTATION POUR UNE POMPE À VIDE

(43) Veröffentlichungstag der Anmeldung: 08.03.2017
(73) Patentinhaber: PFEIFFER VACUUM GMBH, 35614 Asslar (DE)
(72) Erfinder: Wirth Dr. rer. nat., Adrian, 35582 Wetzlar (DE); Mekota, Mirko, 35630 Ehringshausen (DE); Rippl, Andreas, 35578 Wetzlar (DE)
(74) Vertreter: Manitz Finsterwald Patent- und Rechtsanwaltspartnerschaft mbB

(56) Entgegenhaltungen:
- EP-A2- 2 916 009
- EP-A2- 2 933 496
- DE-A1- 3 039 196
- JP-A- S 582 719
- JP-A- 2007 224 924
- JP-A- 2011 112 514

## Beschreibung

Die vorliegende Erfindung betrifft ein Verfahren zum Wuchten eines Rotors einer Vakuumpumpe oder eines Rotors einer Rotationseinheit für eine Vakuumpumpe.

Vakuumpumpen spielen in der Vakuumtechnik eine wichtige Rolle und werden in den unterschiedlichsten technischen Anwendungen zum Absaugen von vornehmlich gasförmigen Medien und zur Evakuierung von Hohlräumen eingesetzt. Dabei kommen u. a. Turbomolekularpumpen, Turbopumpen oder Seitenkanalpumpen zum Einsatz, die üblicherweise eine Rotationseinheit mit einem Stator und einem gegenüber dem Stator drehbaren Rotor aufweisen, wobei der Rotor zur Erzeugung eines hochreinen Vakuums mit normalerweise sehr hohen Drehzahlen drehend angetrieben wird.

Bei diesen sehr hohen Drehzahlen kommt einer möglichst reibungsfreien Lagerung des Rotors gegenüber dem Stator eine besondere Bedeutung zu. Diese Lagerung wird üblicherweise durch zwei Lager erreicht, die ein im Bereich der Saugöffnung, d. h. der Hochvakuumseite der Pumpe, angeordnetes Lager und ein in der Nähe der Gasaustrittsöffnung, d. h. der sogenannten Vorvakuumseite der Pumpe, angeordnetes Vakuum umfassen. Da das an der Hochvakuumseite vorgesehene Lager mit dem zu evakuierenden Volumen in Verbindung steht, muss dieses Lager möglichst verschmutzungsfrei ausgeführt sein, um eine Verschmutzung des zu evakuierenden Volumens bzw. der darin enthaltenen Medien, insbesondere durch Schmieröl, zu verhindern.

Um die Anforderungen an eine möglichst reibungsarme und gleichzeitig verschmutzungsfreie Lagerung zu erfüllen, ist es bekannt, das an der Hochvakuumseite vorgesehene Lager als Magnetlager und insbesondere als Permanentmagnetlager auszuführen, welches einen an dem Stator angebrachten Magnetringstapel und einen an dem Rotor angebrachten Magnetringstapel umfassen kann, die ineinander angeordnet sind und durch ihre gegenseitige magnetische Abstoßung eine drehbare radiale Lagerung gewährleisten.

Eine Unwucht am Rotor kann bei sich drehendem Rotor nicht nur Vibrationen hervorrufen, sondern auch zu Beschädigungen führen. Der Rotor muss daher gewuchtet werden, bevor die Vakuumpumpe bzw. Rotationseinheit bestimmungsgemäß eingesetzt werden kann.

Aus dem Stand der Technik ist es bekannt, zum Ausgleichen einer Unwucht des Rotors Wuchtgewichte in Wuchtbohrungen, die im Rotor vorgesehen sind, einzuschrauben. Ein derartiges Verfahren zum Wuchten eines Rotors ist in der EP 2 881 591 A2 beschrieben. Ferner sind Wuchtalgorithmen, welche aus gemessenen Rotorauslenkungen bei Rotation die entsprechenden Lagen und Massen von Wuchtgewichten errechnen, Stand der Technik und aus entsprechender Fachliteratur bekannt. Ferner beschreibt die DE 30 39 196 A1 ein Montageverfahren für eine Vakuumpumpe, bei dem das Rotorsystem außerhalb des Pumpengehäuses gewuchtet und erst danach in diesem montiert wird. Gemäß der Lehre der JP 2007 224924 A1 wird eine Unwucht bei einer Vakuumpumpe ausgeglichen, indem ein Zusatzgewicht an der Innenseite des Rotors vorgesehen wird. Letztendlich beschreibt die JP 2011 112514 A ein Laser basiertes Wuchtverfahren für beispielweise die Welle eines Turboladers. Ein weiteres Wuchtverfahren geeignet für Vakuumpumpen ist aus JP S58 2719 A bekannt. Die Dokumente EP 2 916 009 A2 und EP 2 933 496 A2 fallen unter Art. 54(3) EPÜ und sind somit für die Frage der erfinderischen Tätigkeit nicht von Bedeutung.

Die Verwendung von Wuchtgewichten bringt einige Nachteile mit sich. Beispielsweise ist der Winkel am Umfang eines Rotors, in dem ein Wuchtgewicht eingeschraubt werden kann, auf die Anzahl und Lage der Gewindebohrungen im Rotor begrenzt. Eine hohe Winkelauflösung zum Erzielen einer hohen Wuchtgüte benötigt eine hohe Anzahl von Gewindebohrungen oder kann nur bedingt durch eine Aufteilung von Ausgleichsmassen in zwei oder mehrere Wuchtgewindegänge realisiert werden. Als weiterer Nachteil ist zu nennen, dass die Gewindebohrungen kosten- und zeitaufwendig in ihrer Herstellung sind und außerdem vakuumtauglich gereinigt werden müssen. Ferner ist zum Erreichen einer hohen Wuchtgüte eine feine Klassifizierung der Wuchtschrauben in verschiedene Gewichtsklassen erforderlich. Dies bedingt eine Bevorratung von vielen verschiedenen und auch sehr filigranen Wuchtschrauben. Außerdem ist das Risiko von falsch - insbesondere im Hinblick auf das gewählte Gewicht und den Einschraubort - eingeschraubten Wuchtschrauben hoch.

Ein weiterer zu nennender Nachteil ist, dass die Wuchtschrauben sich im Betrieb lösen und dadurch Beschädigungen verursachen können. Außerdem können feine Partikel, wie etwa Späne, durch das Einschrauben der Wuchtschrauben entstehen. Hinter den eingeschraubten Wuchtschrauben können sich sogenannte virtuelle Lecks bilden. Hierbei handelt es sich um Lufteinschlüsse, die unter Vakuum langsam ausgasen und die Qualität des erzeugten Vakuums negativ beeinflussen. Ein weiterer Nachteil ist, dass Wuchtschrauben nur eine geringe Flexibilität in der Wahl der Lage der Wuchtebenen bieten, da die Gewindegänge der Wuchtbohrungen eine entsprechende axiale und/oder radiale Länge und eine entsprechende radiale und/oder axiale Tiefe der Wuchtebene erfordern. Nachteilig ist ferner, dass eingeschraubte Ausgleichsmassen den Rotor punktuell belasten durch die bei umlaufendem Rotor auftretenden Zentrifugalkräfte. Durch das Bohren der Gewindebohrungen im Rotor entsteht außerdem ein Teil der Rotorunwucht, zumal die Wuchtbohrungen normalerweise leichte Symmetriefehler aufweisen. Ein weiterer Nachteil von Wuchtschrauben ist, dass der Wuchtvorgang nur bei stillstehendem Rotor durchgeführt werden kann.

Der vorliegenden Erfindung liegt die Aufgabe zugrunde, ein verbessertes Verfahren zum Wuchten eines Rotors einer Vakuumpumpe oder eines Rotors einer Rotationseinheit für eine Vakuumpumpe bereitzustellen, das mit keinen oder zumindest weniger Wuchtschrauben auskommt und mittels dem sich eine Unwucht des Rotors möglichst vollständig und auf einfache Weise beseitigen lässt. Der vorliegenden Erfindung liegt außerdem die Aufgabe zugrunde, eine Vakuumpumpe oder Rotationseinheit bereitzustellen, bei der der Rotor möglichst vollständig gewuchtet ist.

Die Aufgabe wird durch ein Verfahren mit den Merkmalen des Anspruchs 1 bzw. durch eine Vakuumpumpe oder Rotationseinheit mit den Merkmalen des Anspruchs 10 gelöst. Bevorzugte Ausführungsformen und Weiterbildungen der Erfindung sind in den abhängigen Ansprüchen beschrieben.

Ein erfindungsgemäßes Verfahren zum Wuchten eines Rotors einer Vakuumpumpe, insbesondere Turbopumpe, Turbomolekularpumpe oder Seitenkanalpumpe, oder eines Rotors einer Rotationseinheit für eine Vakuumpumpe, insbesondere Turbopumpe, Turbomolekularpumpe oder Seitenkanalpumpe, wobei der Rotor gegenüber einem Stator der Vakuumpumpe oder der Rotationseinheit um eine Rotationsachse drehbar gelagert ist, umfasst die Schritte, dass eine Unwucht des Rotors bei sich um die Rotationsachse drehendem Rotor gemessen und der Rotor an wenigstens einer in Abhängigkeit von der gemessenen Unwucht errechneten Stelle mit einem Strahl, insbesondere Laser-, lonen- oder Elektronenstrahl, derart beaufschlagt wird, dass mittels des Strahls zur möglichst vollständigen Beseitigung oder zumindest zur Reduzierung der Unwucht Material von dem Rotor abgetragen wird.

Der Erfindung liegt somit der Gedanke zugrunde, den Rotor zu wuchten, indem die Unwucht durch Abtragen von Material von dem Rotor mittels eines Strahls beseitigt bzw. kompensiert wird. Auf Wuchtschrauben kann somit zumindest weitgehend verzichtet werden, wodurch die vorstehend im Zusammenhang mit den Wuchtschrauben erwähnten Nachteile vermieden werden können. Eine Wuchtschraube kann normalerweise nur in eine vorgegebene Gewindebohrung eingeschraubt werden, während mittels des erfindungsgemäßen Verfahrens Material an einer oder mehreren im Prinzip beliebigen Stellen von der Oberfläche des Rotors entfernt werden kann. Dadurch kann eine besonders hohe Wuchtgüte erreicht werden, zumal der Materialabtrag bis in den Submikrogrammbereich präzise dosiert werden kann.

Das erfindungsgemäße Verfahren erlaubt es, den Wuchtvorgang an einer im Prinzip beliebig gewählten Wuchtebene vorzunehmen, da die in der Wuchtebene liegende Rotoroberfläche nur für den Strahl zugänglich sein muss. Je nach Wahl der Strahlparameter ist, insbesondere bei einem Laserstrahl und einem Einsatz von Brennweiten von mehreren Zentimetern oder Dezimetern, ein nur geringfügiger Zugangsbereich zu einer Wuchtebene zum Zwecke des Materialabtrags ausreichend. Demgegenüber muss eine Wuchtebene mit einer Gewindebohrung zum Einschrauben eines Wuchtgewichts besser zugänglich sein. Das erfindungsgemäße Verfahren zum Wuchten eines Rotors erlaubt somit eine wesentliche flexiblere Auswahl der in Frage kommenden Wuchtebenen.

Bei der Miniaturisierung der Rotoren auf dem Gebiet der Vakuumtechnik ermöglicht das erfindungsgemäße Verfahren das Erreichen einer hohen Wuchtgüte, insbesondere auch bei kleineren Rotoren. Eine in der Größe von konventionellen Wuchtschrauben ihre Limitierung in Bezug auf die Wuchtgüte findende Wuchttechnologie kann durch einen strahlbasierten Materialabtrag um einen Gütesprung und der Möglichkeit einer vollautomatisierten Rotorwuchtung weiter verbessert werden. Insbesondere ermöglicht der Einsatz des erfindungsgemäßen Verfahrens den zum Wuchten erforderlichen präzisen Materialabtrag bei extrem kleinen und kompakten Rotoren, an die aufgrund ihrer Kompaktheit keine Wuchtbohrungen angebracht werden können.

Ferner ist es möglich, die bei der Ablation anfallenden Materialpartikel und/oder den anfallenden Staub einzufangen bzw. abzusaugen und eine Anlagerung am Rotor oder an der Vakuumpumpe zu vermeiden.

Da heutzutage industriell zuverlässige und fertigungstaugliche Lasersysteme verfügbar sind, kann die Laserablation als Wuchtverfahren auch vollautomatisch betrieben werden. Daher kann ein vollautomatisches Wuchtverfahren realisiert werden.

Vorzugsweise wird der Rotor zum Messen der Unwucht auf wenigstens eine definierte Drehzahl gebracht und die Auslenkung des Rotors wird, insbesondere an wenigstens zwei - bezogen auf die Rotationsachse - axial versetzt zueinander liegenden Punkten der Rotoroberfläche, in Abhängigkeit von einem Drehwinkel des Rotors gemessen. Aus dem Stand der Technik bekannte Wuchtalgorithmen können anhand der erhobenen Auslenkungsdaten und Winkelinformationen nach dem Rotor angepasster Modellierung den Unwuchtzustand des Rotors ermitteln und nach Definition von Wuchtebenen (Ebenen in welchen Ausgleichsmassen angebracht werden können) die Größe und Winkellage der anzubringenen Ausgleichsmasse in jeder Wuchtebene ermitteln. Die Wuchtebenen müssen nicht mit den Messebenen übereinstimmen. Für hochkomplexe Rotorsysteme kann es auch notwendig werden mehr als zwei Wuchtebenen zu bestimmen, um der Biegungsbewegung des Rotors oder rotordynamischen Ausrichtungseffekten Rechnung zu tragen.

Es kann vorgesehen sein, dass anhand der Auslenkung des Rotors, insbesondere mittels eines dem Stand der Technik entsprechenden Wuchtalgorithmus, eine axiale Lage der Ausgleichsmasse (auch "Unwucht" zur Kompensation genannt), eine Winkellage der Ausgleichsmasse und eine Größe der Unwucht errechnet wird und dass in Abhängigkeit von der axialen Lage, Winkellage und Größe der Unwucht die Stelle und/oder die an der Stelle abzutragende Materialmenge berechnet werden. Mit axialer Lage ist dabei die Lage der Ausgleichsmasse (Wuchtebene) bezogen auf die Längsrichtung der Rotationsachse gemeint. Die Lage des Schwerpunkts S der Ausgleichsmasse kann außerdem als Funktion des radialen Abstands r des Schwerpunkts S zur Rotationsachse angegeben werden, so dass S eine Funktion von h und r ist. Mit der Winkellage ist die Lage des Schwerpunkts der Unwucht bezogen auf die Umfangsrichtung bzw. den Drehwinkel ϕ des Rotors gemeint, so dass S außerdem eine Funktion des Drehwinkels ϕ ist. Mit der Größe der Unwucht U ist das Produkt aus der am Schwerpunkt konzentrierten Masse Δm der Unwucht / Ausgleichsgewicht und dem radialen Abstand r gemeint, d.h. U = Δm ^{∗} r, entsprechend der an sich bekannten Formel zur Berechnung einer Unwucht einer Punktmasse Δm im Abstand r zur Rotationsachse.

In Abhängigkeit von der ermittelten axialen Lage der Ausgleichsmasse, der Winkellage der Masse und der Größe der Unwucht kann dann eine Stelle, an der die Beaufschlagung mit dem Strahl erfolgen soll, und die an der Stelle abzutragende Materialmenge errechnet werden. Die Stelle und die abzutragende Materialmenge können so ermittelt werden, dass die gemessene Unwucht durch den Materialabtrang an der Stelle zumindest annähernd kompensiert wird. Anstelle oder ergänzend zu der abzutragenden Materialmenge können auch Strahlparameter, wie etwa die Strahlintensität und die Zeitdauer der Beaufschlagung, berechnet werden, die zur Abtragung der Materialmenge erforderlich sind. Die durch den Standardalgorithmus bestimmte Ausgleichsmasse ist bei gleichem radialen Abstand r in der Wuchtebene gleich der abzutragenden Masse. Jedoch verändert sich die Winkellage beim Übergang vom Einschrauben von Wuchtgewichten zum Materialabtrag um 180°. Die Abtragsstelle befindet sich somit auf der an der Rotorachse gespiegelten Winkellage für das Anbringen von Wuchtgewichten.

Die Messung der Auslenkung kann optisch oder induktiv, z.B. mittels einem oder mehrerer Geschwindigkeits-, Beschleunigungs- oder Wegsensoren, erfolgen.

Bevorzugt wird der Rotor an der errechneten Stelle mit dem Strahl bei sich drehendem Rotor beaufschlagt. Der Rotor kann daher zum Beispiel bei einer kritischen Drehzahl des Rotors, etwa bei einer Eigenfrequenz, oder bei einer für den Betrieb der Vakuumpumpe vorgesehenen Nenndrehzahl gewuchtet werden. Darüberhinaus besteht keine Notwendigkeit mehr, den Rotor zur Materialentfernung wieder abzubremsen. Die zum Abbremsen benötigte Zeit kann eingespart werden.

Um bei sich drehendem Rotor nur die vorgesehene Stelle mit dem Strahl zu beaufschlagen, kann der Strahl in Abhängigkeit von der Drehzahl des Rotors z.B. mit einem Shutter gesteuert werden, welches den Strahl nur dann passieren lässt, wenn dieser auf die vorgesehene Stelle trifft. Bevorzugt handelt es sich bei dem Strahl um einen Laserstrahl und bei dem Shutter handelt es sich um einen elektrooptischen oder akustooptischen Shutter. Es kann auch ein Spiegelsystem verwendet werden, mittels dem der Strahl nur dann auf den Rotor gelenkt wird, wenn sichergestellt ist, dass die vorgesehene Stelle beaufschlagt wird. Bei einem Laserstrahl kann anstelle eines Shutters auch ein akustooptischer oder elektrooptischer Modulator zur Strahlablenkung eingesetzt werden.

Nach einer bevorzugten Weiterbildung der Erfindung wird der Rotor unter Vakuum gewuchtet. Der Rotor kann somit aufgrund der im Vakuum vorhandenen geringeren Gasreibung auf eine hohe Drehzahl, gebracht und dann gewuchtet werden. Dadurch kann eine besonders hohe Wuchtgüte erreicht werden.

Es kann auch der in die Vakuumpumpe eingebaute Rotor gewuchtet werden. Dadurch können Unwuchten, die sich bei der Einlagerung des Rotors in die Vakuumpumpe ergeben, berücksichtigt werden. Die Partikel, die beim Wuchten durch den Materialabtrag entstehen können, sind derart klein, dass sie den Betrieb der Vakuumpumpe nicht beeinflussen oder müssen durch geeignete Zugänge und Absaugzuführungen abgesaugt werden.

Die Stelle und die an der Stelle abzutragende Masse werden erfindungsgemäß derart bei der Auslegung des Rotors errechnet, dass durch den Materialabtrag eine möglichst große Korrektur der Unwucht erreicht wird (Kompensatorische Unwucht U = Δm^{∗}r). Dabei kann zum Beispiel angestrebt werden, dass der Quotient aus durch Ablation der Masse erzeugter Unwucht U und der abgetragenen Gesamtmasse möglichst groß ist, um einen Materialabtrag möglichst effizient in eine Korrektur der Unwucht umzusetzen.

Besonders vorteilhaft ist es, wenn die Stelle derart am Rotor gelegt werden kann, dass sie einen möglichst großen radialen Abstand zur Rotationsachse aufweist. Dadurch kann die zu entfernende Masse möglichst gering gehalten werden, da sich die erzeugte Unwucht U aus dem Produkt aus der Masse Δm und dem radialen Abstand r zur Rotationsachse ergibt. Je weniger Material entfernt werden muss, umso schneller kann der Wuchtvorgang abgeschlossen werden. Alternativ ist eine geringere Strahlleistung für den Materialabtrag erforderlich. Der Wuchtvorgang kann somit insbesondere im Hinblick auf Zeitdauer und erforderlicher Strahlleistung optimiert werden, wodurch eine Kostensenkung erreicht werden kann.

Besonders vorteilhaft ist es, wenn die an der Stelle abzutragende Materialmenge derart berechnet wird, dass sich der Materialabtrag, insbesondere bei gleich bleibender radialer Tiefe, in Drehrichtung des Rotors gesehen über einen bestimmten Drehwinkelbereich erstreckt. Insbesondere ist es vorgesehen, dass der Drehwinkelbereich deutlich größer ist als der Durchmesser des Strahls. Es kann somit ein flächiger, sich in Drehrichtung des Rotors und daher - in Bezug auf die Rotoroberfläche - in tangentialer Richtung erstreckender Materialabtrag vorgesehen sein, was gegenüber einem etwa punktuellen Materialabtrag, dessen Ablationsfläche nur eine geringe axiale und/oder tangentiale Erstreckung aufweist, Vorteile mit sich bringt. Ein punktueller Materialabtrag benötigt normalerweise eine verhältnismäßig große Erstreckung in radialer Richtung und somit einen tiefen Materialabtrag mit einer einhergehenden deutlichen Radiusänderung und strahltechnischen Einschränkungen verbunden mit wieder punktförmigeren und lokalisierten Belastungen des Rotors welche langfristige strukturmechanische Änderungen des Rotors nach sich ziehen können.

Bevorzugt liegt der Drehwinkelbereich im Bereich zwischen einem Drehwinkel des Rotors von 0 Grad und 180 Grad, weiter bevorzugt liegt der Drehwinkelbereich zwischen einem Drehwinkel des Rotors von 0 Grad und 90 Grad und noch weiter bevorzugt liegt der Drehwinkelbereich zwischen einem Drehwinkel des Rotors von 5 Grad und 60 Grad.

Die Stelle liegt an einer Schaufel des Rotors, insbesondere an einer radial außenliegenden Oberfläche der Schaufel. Der Materialabtrag kann somit in einem verhältnismäßig großen radialen Abstand zur Rotationsachse erfolgen, so dass die abzutragende Masse gering gehalten werden kann. Durch das Abtragen von Material von der Schaufel wird außerdem die Schaufel leichter, wodurch die von der Schaufel bewirkten fliehkraftinduzierten Spannungen, insbesondere im Schaufelrund und in der Welle-Rotorscheibe-Verbindung, reduziert werden können. Indem Material von der Scheibe abgetragen wird, findet der Materialabtrag außerdem an einem spannungsunkritischen Ort statt. Bei der radial außenliegenden Oberfläche der Schaufel kann es sich um eine Spitze der Schaufel handeln.

Die Stelle liegt an einer, insbesondere radial außen liegenden, Oberfläche einer Rotornabe liegen, an welcher wenigstens eine Holweckrotorhülse angeordnet ist. Der Materialabtrag kann somit an einem spannungsunkritischen Ort mit einem großen radialen Abstand zur Rotationsachse erfolgen. Außerdem kann eine durch eine Holweckrotorhülse bewirkte Unwucht sehr nah an ihrem Ursprungsort kompensiert werden.

Die Stelle kann an einer, insbesondere radial außen liegenden, Oberfläche einer Holweckrotorhülse liegen. Dadurch kann eine von der Holweckrotorhülse bewirkte Unwucht sehr nah an ihrem Ursprungsort ausgeglichen werden. Die Holweckrotorhülse kann aus Kohlefaser bestehen.

Die Stelle kann an einer, insbesondere radial außen liegenden, Oberfläche einer Gaede-, Siegbahn- oder Seitenkanalstufe liegen. Dadurch kann eine von der Stufe bewirkte Unwucht nah an ihrem Ursprungsort ausgeglichen werden.

Die Stelle kann an einer, insbesondere radial außen liegenden, Oberfläche eines eigens für den Materialabtrag vorgesehenen Wuchtbauteils liegen, welches in einer Wuchtebene am Rotor angeordnet ist und/oder aus einem Material mit einer hohen Dichte und/oder aus einem Material, in das ein Laserstrahl gut einkoppelbar ist, besteht. Bei dem Material kann es sich um Edelstahl handeln. Bevorzugt ist das Wuchtbauteil als ein Drehteil und besonders bevorzugt als Ring ausgebildet, der vorzugsweise auf eine Welle des Rotors gefügt, also aufgeschrumpft oder aufgepresst, ist. Das Wuchtbauteil ist eigens für den Materialabtrag vorgesehenen. Es handelt sich somit um ein zusätzliches Bauteil, das eigens für die Bearbeitung durch den Strahl mit dem Ziel der Verbesserung der Wuchtgüte am Rotor angeordnet werden kann.

Vorzugsweise ist ein System zur Strahllenkung vorgesehen, mittels dem der Strahl auf die Stelle gelenkt wird. Wenn es sich bei dem Strahl um einen Laserstrahl handelt, kann das System einen Lichtleiter, in den das von einem Laser kommende Laserlicht eingekoppelt wird, und eine dem Lichtleiter nachgeordnete Optik aufweisen, mittels der der Laserstrahl auf die Stelle gerichtet bzw. fokussiert werden kann.

Zum Verstellen des Strahls in - bezogen auf die Rotationsachse des Rotors - radialer Richtung, axialer Richtung oder Umfangsrichtung kann das System zur Strahllenkung oder zumindest die dem Lichtleiter nachgeordnete Optik an einer Verstelleinrichtung, insbesondere einem Portalsystem, angeordnet sein, mittels der der Strahl in radialer und/oder axialer Richtung verfahren bzw. verstellt werden kann. Der Strahl kann mit der Verstelleinrichtung somit auf einfache Weise auf die gewünschte Stelle gelenkt werden.

Die vom Laser kommende Strahlung kann auch über optische Elemente, insbesondere reflektive und refraktive Optiken, zu der wenigstens einen zu beaufschlagenden Stelle gelenkt werden. Das System zur Strahllenkung kann ein Galvosystem umfassen, mittels dem der Laserstrahl auf die zu beaufschlagende Stelle gelenkt werden kann. Es kann auch vorgesehen sein, dass der Rotor zum Strahl positioniert wird. Es können auch Mischformen der vorstehend genannten Ausgestaltungen zum Einsatz kommen.

Beispielweise kann der Rotor relativ zum Laserstrahl positioniert werden, so dass die Stelle von dem Laserstrahl beaufschlagt werden kann. Eine Fokussieroptik, die bspw. in einem Laserkopf angeordnet sein kann, wird radial zum Rotor verfahren, um die Stelle in den Fokus des Laserstrahls zu bringen. Außerdem kann der Rotor um seine Rotationsachse gedreht werden, um eine Erstreckung der Abtragung in Umfangsrichtung des Rotors über den Durchmesser des Laserstrahls hinaus zu erreichen und somit eine errechnete Menge an Material an der Stelle abzutragen. Eine Bewegung des Rotors in axialer Richtung kann ebenfalls vorgesehen sein, um eine Erstreckung der abgetragenen Stelle in axialer Richtung zu erreichen.

Beispielsweise wird auch eine Vorrichtung zum Wuchten eines Rotors einer Vakuumpumpe oder einer Rotationseinheit für eine Vakuumpumpe offenbart, die dazu eingerichtet und ausgebildet ist, das erfindungsgemäße Verfahren auszuführen.

Die Erfindung betrifft auch eine Vakuumpumpe, insbesondere Turbopumpe, Turbomolekularpumpe oder Seitenkanalpumpe, oder Rotationseinheit für eine Vakuumpumpe, insbesondere Turbopumpe, Turbomolekularpumpe oder Seitenkanalpumpe, gemäß Anspruch 10.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6: eine Querschnittsansicht des Rotors der Turbomolekularpumpe,
- Fig. 7: eine Draufsicht auf die Oberseite des Rotors der Fig. 6,
- Fig. 8: eine perspektivische Ansicht einer Rotornabe des Rotors von Fig. 6,
- Fig. 9: ein Diagramm, das einen berechneten Verlauf des Quotienten der erzeugten Unwucht pro ablatierter Masse, normiert auf 1, über dem Drehwinkelbereich zeigt, über den sich ein Materialabtrag erstreckt, und
- Fig. 10: eine Vorrichtung zur Durchführung eines Wuchtverfahrens an einem Rotor.

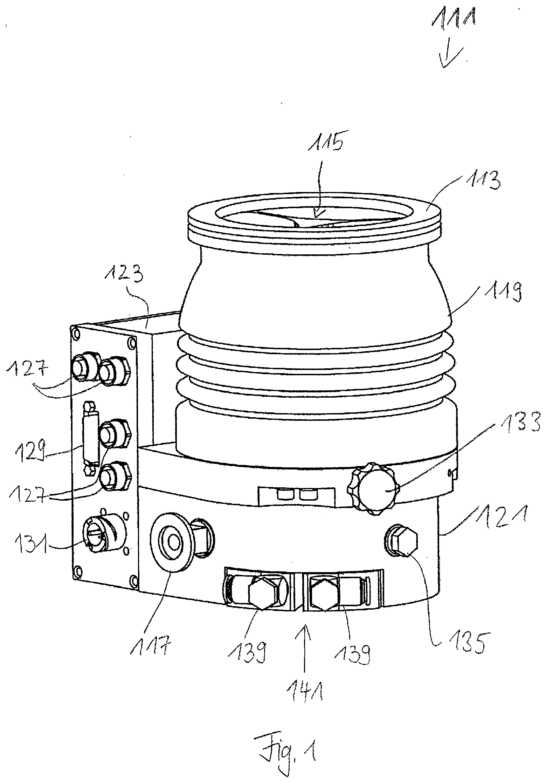

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

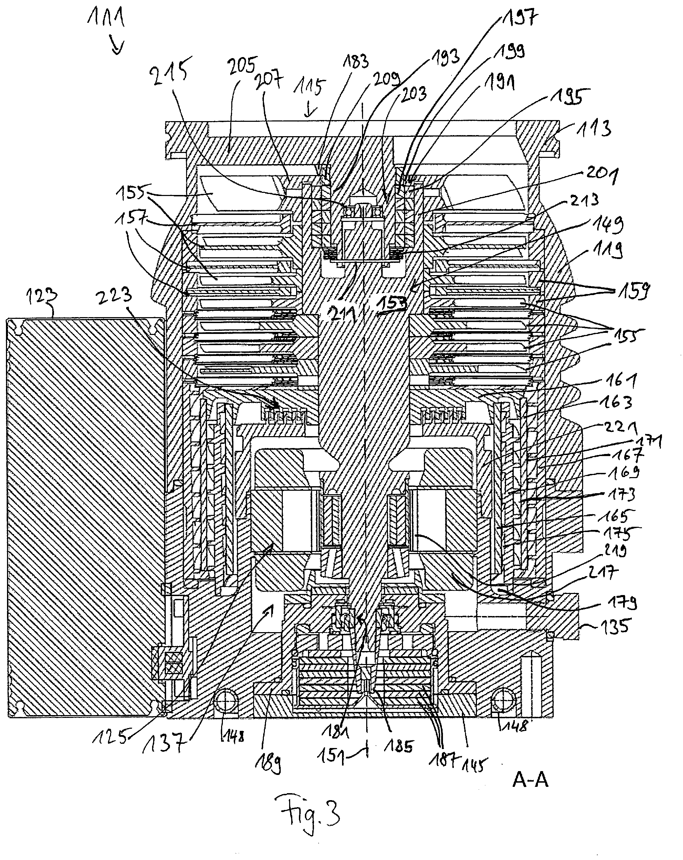

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

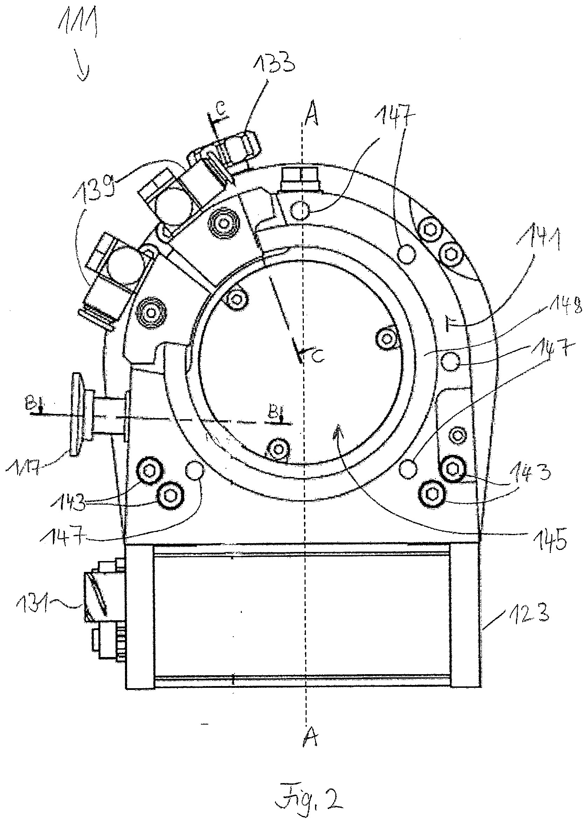

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

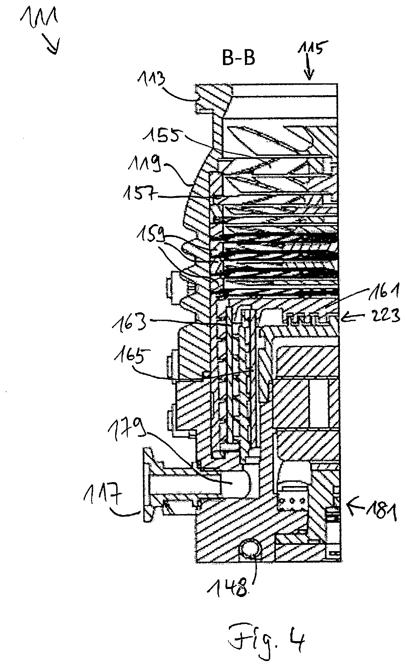

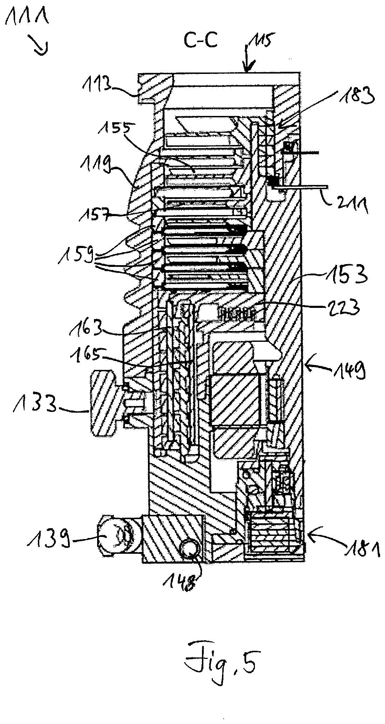

In den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

Der Rotor 149 führt während des Betriebs der Turbomolekularpumpe 111 sehr schnelle Drehungen um die Rotationsachse 151 aus, so dass der Rotor 149 gewuchtet sein muss, insbesondere aus Gründen der Laufruhe und zur Vermeidung von Schäden am Rotor oder der Pumpe. Erfindungsgemäße Ausführungsformen eines Verfahrens zum Wuchten eines Rotors werden nachfolgend beschrieben.

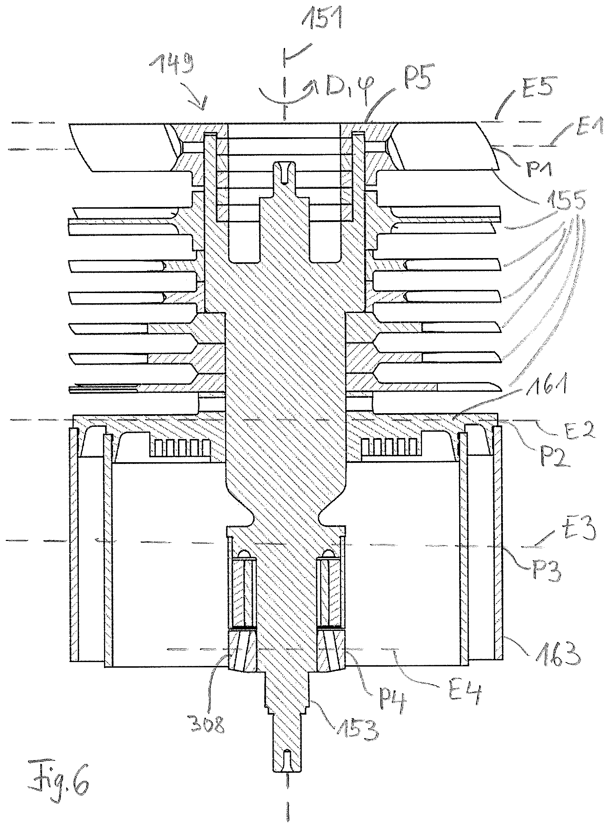

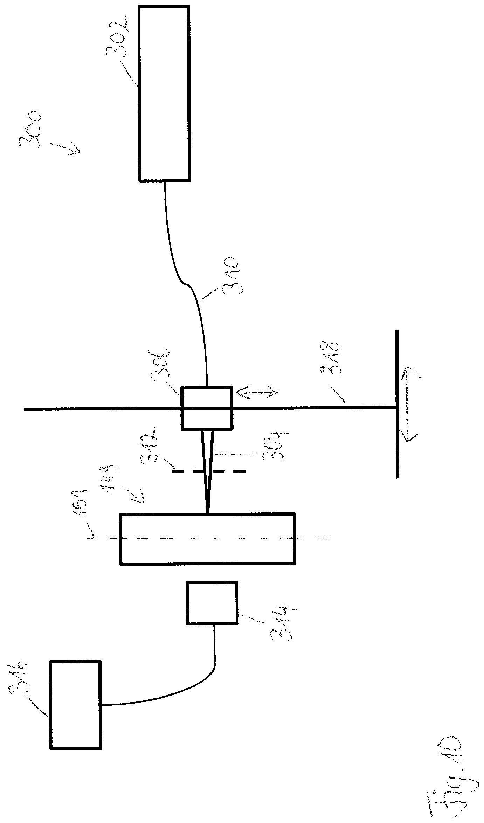

Die Fig. 6 zeigt eine Querschnittsansicht des Rotors 149, der sich in Details aber auch von dem in Fig. 3 dargestellten Rotor unterscheiden kann. Der Rotor 149 wird zum Wuchten um seine Rotationsachse 151 in Drehung versetzt und eine dabei auftretende Unwucht des Rotors 159 wird gemessen. Zum Messen der Unwucht des Rotors 149 wird die Auslenkung des Rotors 149 in Abhängigkeit vom Drehwinkel ϕ mit wenigstens einem Sensor 314 (vgl. Fig. 10) gemessen. Die Messung erfolgt zum Beispiel an wenigstens zwei Punkten, die in verschiedenen senkrecht zur Rotationsachse 151 verlaufenden Messebenen liegen. Die Messebenen können, müssen aber nicht mit den in Fig. 6 eingezeichneten Wuchtebenen E1 bis E5 zusammenfallen. Die Messung kann ferner bei verschiedenen Drehzahlen des Rotors 149 erfolgen. Zum Beispiel kann die Drehzahl stufenweise auf definierte sogenannte Wuchtdrehzahlen erhöht werden.

Basierend auf den bei der Messung gewonnenen Daten, also insbesondere basierend auf den in Abhängigkeit von der Messebene und/oder dem Messpunkt, vom Drehwinkel ϕ und/oder der Drehzahl gemessenen Auslenkungswerten, kann unter Verwendung eines dem Stand der Technik entsprechenden Algorithmus, z.B. von der in Fig. 10 gezeigten Steuereinrichtung 316, eine vorhandene Unwucht berechnet werden.

Diese Algorithmen zur Bestimmung einer Unwucht sind bekannt. Insbesondere sind Algorithmen im Zusammenhang mit den eingangs erwähnten Wuchtgewichten bekannt. Derartige Algorithmen können anhand der gemessenen Auslenkungswerte eine Unwucht eines Rotors berechnen und ferner berechnen, welches Wuchtgewicht in welche Wuchtbohrung einzuschrauben ist, um die Unwucht zumindest annähernd zu beseitigen. In der hier vorgestellten Abwandlung wird im Unterschied zu einem Wuchtgewicht die abzutragende Materialmenge als negative, vom Rotor abgehende Masse berücksichtigt, so dass der zum Einsatz kommende Algorithmus fast völlig identisch zu Standardwuchtalgorithmen ausgestaltet sein kann, mit der Abweichung, dass - wie eingangs erwähnt - die abzutragende Masse auf der um 180° gegenüberliegenden Winkelposition wie die Wuchtschraubeneinbringung vollzogen wird. Der Betrag der abzutragenden Masse entspricht der des durch den Standardalgorithmus errechneten Ausgleichsmasse.

Die Steuereinrichtung 316 kann ferner Steuerparameter für ein Lasersystem 300 (vgl. Fig. 10) berechnen. In den Steuerparametern kann zum Beispiel spezifiziert sein, welche Leistung ein von einem Laser 302 des Lasersystems 300 bereitgestellter Laserstrahl 304 aufweisen muss, damit ein an einer Stelle vorgesehener Materialabtrag realisiert werden kann. Außerdem können die für einen an einer Stelle vorgesehenen Materialabtrag erforderliche Bestrahlungszeitdauer und weitere Parameter, z.B. bzgl. der Positionierung eines Laserkopfs 304 des Lasersystems 300 relativ zum Rotor 149, in den Steuerparametern spezifiziert sein.

Jeder Standardwuchtalgorithmus benötigt die Festlegung von Wuchtebenen. Diese verlaufen senkrecht zur Rotationsachse 151. Beispielweise können die in Fig. 6 gezeigten Wuchtebenen E1, E2, E3, E4 und E5 vorgegeben sein. Ein Standardalgorithmus berücksichtigt die Wuchtebenen gewissermaßen als Randbedingungen und errechnet die Ausgleichsstellen derart, dass sie in einer der Wuchtebenen E1 bis E5 liegt bzw. liegen.

Die Wuchtebene E1 verläuft durch die in axialer Richtung gesehen außen liegende Rotorscheibe 155, die auch als Rotorschaufel bezeichnet wird. Eine Stelle P1, an der ein Materialabtrag in der Wuchtebene E1 erfolgt, liegt bevorzugt an der radial außenliegenden Oberfläche der Rotorschaufel 155 und somit insbesondere an der Schaufelspitze. Dies kann ebenfalls als Randbedingung zur Bestimmung der Stelle P1 in den Algorithmus einfließen.

Die Wuchtebene E2 verläuft durch die Rotornabe 161, wobei eine Stelle P2, an der ein Materialabtrag erfolgt, wiederum bevorzugt an der radial außen liegenden Oberfläche der Rotornabe 161 liegt. Dies kann auch als Randbedingung für die Berechnung der Stelle P2 im Algorithmus berücksichtigt werden.

Die Wuchtebene E3 verläuft durch die äußere Holweckrotorhülse 163. Eine Stelle P3, an der ein Materialabtrag erfolgt, liegt wiederum bevorzugt an der radial außen liegenden Oberfläche der äußeren Holweckrotorhülse 161. Dies kann ebenfalls als Randbedingung in den Algorithmus einfließen.

Die Wuchtebene E4 verläuft durch ein eigens für den Materialabtrag vorgesehenes Wuchtbauteil 308, das in Form eines Rings ausgebildet und zum Beispiel auf die Rotorwelle 153 aufgeschrumpft oder aufgepresst ist. Das Wuchtbauteil 308 besteht vorzugsweise aus Edelstahl. Eine Stelle P4, an der ein Materialabtrag erfolgt, liegt bevorzugt an der radial außen liegenden Oberfläche des Wuchtbauteils 308. Dies kann wiederum als Randbedingung im Algorithmus berücksichtigt werden.

Die Wuchtebene E5 verläuft durch die Oberseite der radial äußeren Rotorschaufel 155. Eine Stelle P5, an der ein Materialabtrag erfolgt, kann in einem vorgegebenen oder vorgebbaren radialen Abstand zur Rotationsachse 151 liegen. Dies kann ebenfalls als Randbedingung im Algorithmus berücksichtigt werden.

Entsprechend den vorstehenden Ausführungen kann der Algorithmus ausgestaltet sein, um in Abhängigkeit von der gemessenen Unwucht wenigstens eine Stelle P1, P2, P3, P4 oder P5 und die an der Stelle abzutragende Materialmenge in wenigstens einer der Wuchtebenen E1 bis E5 zu bestimmen, um eine möglichst vollständige Kompensation der gemessenen Unwucht zu erreichen.

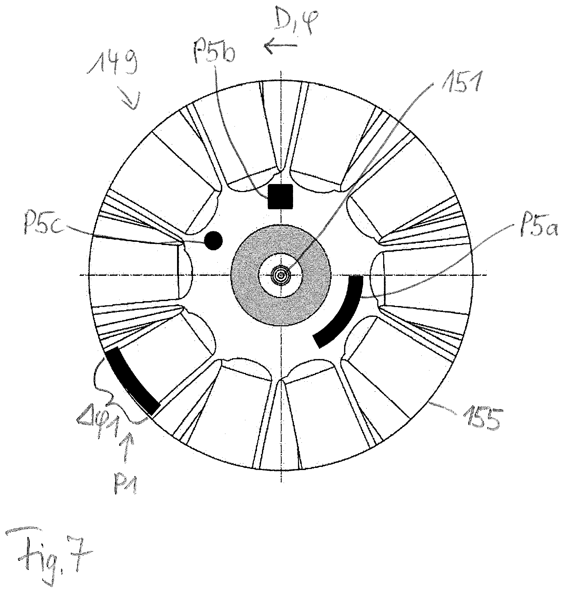

Wie mit Bezug auf die Fig. 7 bis 9 näher erläutert wird, kann die an einer vorgesehenen Stelle abzutragende Materialmenge derart berechnet werden, dass sich der Materialabtrag in Drehrichtung D des Rotors 149 gesehen über einen bestimmten Drehwinkelbereich erstreckt. Beispielsweise kann, wie Fig. 7 zeigt, in der Wuchtebene E1 für die Stelle P1 der Materialabtrag so berechnet werden, dass dieser sich bei gleichbleibender radialer Tiefe über den Drehwinkelbereich Δϕ1 erstreckt.

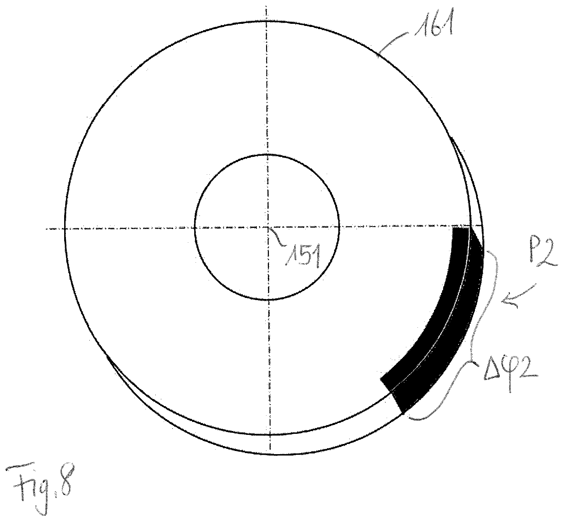

Wie Fig. 8 zeigt, kann auch in der Wuchtebene E2 für die Stelle P2 der Materialabtrag so berechnet werden, dass dieser sich bei gleichbleibender radialer Tiefe über den Drehwinkelbereich Δϕ2 erstreckt. Entsprechendes gilt für die anderen errechneten Stellen bzw. Materialabträge.

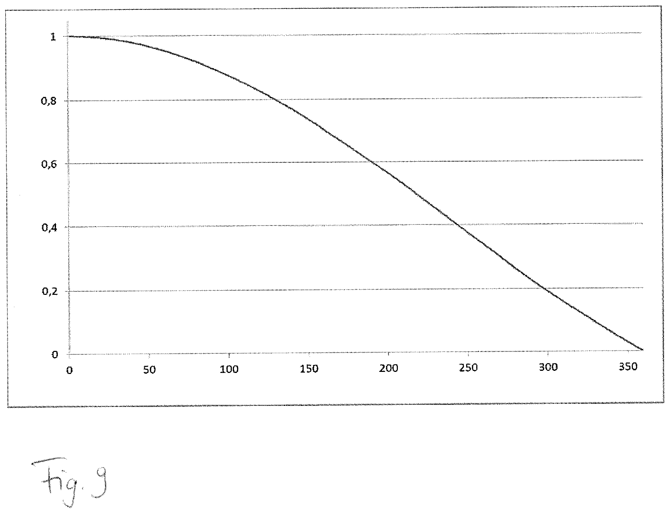

Das Diagramm der Fig. 9 zeigt einen berechneten Verlauf eines Quotienten aus einer erzeugten Unwucht pro abgetragener Masse, normiert auf eins, als Funktion des Drehwinkelbereichs Δϕ in Grad, über den sich der Materialabtrag erstreckt. Wie sich aus dem Diagramm ergibt, ist es bevorzugt, wenn der Drehwinkelbereich zwischen 0° und 180°, weiter bevorzugt zwischen 0° und 90° und noch weiter bevorzugt zwischen 3° und 60° liegt.

Wie in Fig. 7 außerdem dargestellt ist, kann auch an mehreren Stellen in einer Wuchtebene Material abgetragen werden. Beispielsweise kann in der Wuchtebene E5 an den drei in Drehrichtung D versetzt zueinander liegenden Stellen P5a, P5b und P5c ein Materialabtrag erfolgen, wobei an der Stelle P5a der Materialabtrag im Querschnitt teilringförmig ist, während der Materialabtrag an der Stelle P5b einen quadratischen Querschnitt und der Materialabtrag an der Stelle P5c einen kreisrunden Querschnitt aufweist. Im Prinzip sind beliebige Querschnittsformen möglich.

Die in Fig. 10 gezeigte Vorrichtung zur Durchführung eines Wuchtverfahrens weist neben dem bereits erwähnten Lasersystem 300 eine nicht dargestellte Halterung für den Rotor 149 auf, in welcher der Rotor um seine Rotationsachse 151 drehbar angeordnet werden kann. Zur Messung der Auslenkung des Rotors ist der ebenfalls bereits erwähnte Sensor 314 vorgesehen, der mit der Steuereinrichtung 316 gekoppelt ist, die anhand der gemessenen Daten eine Unwucht berechnen kann. Die Steuereinrichtung 316 kann ferner in Abhängigkeit der gemessenen Unwucht wenigstens eine mit dem Laserstrahl 302 zu beaufschlagende Stelle und die dort abzutragende Materialmenge berechnen. Die Steuereinrichtung 316 kann Steuerparameter für das Lasersystem 300 berechnen, die zum Beispiel die Leistung des Laserstrahls 304, die Bestrahlungszeitdauer für die Stelle, usw. spezifizieren.

Bei der dargestellten Variante ist der Laser 302 über eine Faser 310 mit einem Laserkopf 306 gekoppelt, in welchem das Laserlicht aus der Faser 310 ausgekoppelt wird und der eine Fokussieroptik (nicht dargestellt) aufweist, um den Laserstrahl 304 zu fokussieren. Anstelle der Faser 310 können aber auch reflektive und/oder refraktive Optiken, wie etwa Spiegel, eingesetzt werden.

Der Laserkopf 306 kann an einer Halterung 318 angeordnet sein, über die der Laserkopf 306 bezogen auf die Rotationsachse 151 in axialer Richtung und in radialer Richtung verfahren werden kann. Außerdem kann der Rotor 149 um seine Rotationsachse 151 gedreht werden, so dass prinzipiell an jeder von außen zugänglichen Stelle am Rotor 149 Material durch geeignete Positionierung des Laserkopfs 306 abgetragen werden kann.

Um sicherzustellen, dass eine Stelle dem Strahl 304 nur über eine vorgesehene Bestrahlungszeitdauer ausgesetzt ist, kann der Shutter 312 nur für die Dauer der vorgesehenen Bestrahlungszeit geöffnet sein. Der Schutter 312 kann auch mit dem sich drehenden Rotor 149 synchronisiert sein, wodurch eine Materialabtragung bei sich drehendem Rotor realisiert werden kann. Der Laser 302 kann gepulst oder kontinuierlich arbeiten.

Der Rotor 149 kann unter Vakuum gewuchtet werden, indem zum Beispiel ein Vakuumbehälter (nicht gezeigt) um den Rotor 149 herum angeordnet und evakuiert wird. Im Vakuumbehälter kann ein Laserfenster vorgesehen sein, durch das der Laserstrahl 304 auf den im Vakuumbehälter angeordneten Rotor 149 gelenkt werden kann. Der Rotor 149 kann auch erst gewuchtet werden, nachdem er in der Vakuumpumpe angeordnet ist. Dabei kann ein Zugang für den Laserstrahl zum Rotor 149 vorgesehen oder möglich sein.

Die vorstehenden Ausführungen beziehen sich auf den Materialabtrag mittels Laserstrahlung. Es ist aber auch ein Materialabtrag mittels Elektronen- oder lonenstrahlung möglich.

### Bezugszeichenliste

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not-bzw. Fanglager
- 217: Motorstator
- 219: Zwischenraum
- 221: Wandung
- 223: Labyrinthdichtung
- 300: Lasersystem
- 302: Laser
- 304: Laserstrahl
- 306: Laserkopf
- 308: Wuchtbauteil
- 310: Faser
- 312: Shutter
- 314: Sensor
- 316: Steuereinrichtung
- 318: Halterung
- E1: Wuchtebene
- E2: Wuchtebene
- E3: Wuchtebene
- E4: Wuchtebene
- E5: Wuchtebene
- P1: Stelle
- P2: Stelle
- P3: Stelle
- P4: Stelle
- P5: Stelle
- P5a: Stelle
- P5b: Stelle
- P5c: Stelle
- Δϕ: Drehwinkelbereich
- Δϕ1: Drehwinkelbereich
- Δϕ2: Drehwinkelbereich

## Patentansprüche

1. Verfahren zum Wuchten eines Rotors (149) einer Vakuumpumpe (111), insbesondere Turbopumpe, Turbomolekularpumpe oder Seitenkanalpumpe, oder eines Rotors (149) einer Rotationseinheit für eine Vakuumpumpe (111), insbesondere Turbopumpe, Turbomolekularpumpe oder Seitenkanalpumpe,
wobei der Rotor (149) gegenüber einem Stator der Vakuumpumpe (111) oder der Rotationseinheit um eine Rotationsachse (151) drehbar gelagert ist,
wobei das Verfahren umfasst:
- Messen einer Unwucht des Rotors (149) bei sich um die Rotationsachse (151) drehendem Rotor (149); und
- Beaufschlagen des Rotors (149) an wenigstens einer in Abhängigkeit von der gemessenen Unwucht errechneten Stelle (P1, P2, P5) mit einem Strahl (304), insbesondere Laser-, lonen- oder Elektronenstrahl, derart, dass mittels des Strahls (304) zur möglichst vollständigen Beseitigung oder zumindest zur Reduzierung der Unwucht Material von dem Rotor (149) abgetragen wird;
**dadurch gekennzeichnet, dass**
die wenigstens eine Stelle (P1) an einer Schaufel (155) des Rotors (149) liegt, insbesondere an einer radial außenliegenden Oberfläche der Schaufel (155); und/oder dass
die wenigstens eine Stelle (P5) an einer Oberseite einer äußeren Rotorscheibe (155) in einem vorgegebenen oder vorgebbaren radialen Abstand zur Rotationsachse (151) liegt; und/oder dass die wenigstens eine Stelle (P2) an einer Oberfläche einer Rotornabe (161) liegt, an welcher wenigstens eine Holweckrotorhülse (163) angeordnet ist

2. Verfahren nach Anspruch 1,
**dadurch gekennzeichnet, dass**
der Rotor (149) zum Messen der Unwucht auf wenigstens eine definierte Drehzahl gebracht und die Auslenkung des Rotors (149), vorzugsweise an wenigstens zwei - bezogen auf die Rotationsachse - axial versetzt zueinander liegenden Punkten der Rotoroberfläche, in Abhängigkeit von einem Drehwinkel des Rotors (149) gemessen wird, und
in Abhängigkeit von der Unwucht die Stelle (P1, P2, P5) und/oder die an der Stelle (P1, P2, P5) abzutragende Materialmenge und/oder Strahlparameter bzgl. der Stelle und/oder der abzutragenden Materialmenge berechnet werden.

3. Verfahren nach Anspruch 1 oder 2,
**dadurch gekennzeichnet, dass**
der Rotor (149) an der errechneten Stelle (P1, P2, P5) mit dem Strahl (304) bei sich drehendem Rotor (149) beaufschlagt wird.

4. Verfahren nach zumindest einem der vorhergehenden Ansprüche,
**dadurch gekennzeichnet, dass**
der Rotor (149) unter Vakuum gewuchtet wird und/oder der in die Vakuumpumpe (111) eingebaute Rotor (149) gewuchtet wird.

5. Verfahren nach zumindest einem der vorhergehenden Ansprüche,
**dadurch gekennzeichnet, dass**
die Stelle (P1, P2, P5) derart errechnet wird, dass sie einen möglichst großen radialen Abstand zur Rotationsachse (151) aufweist.

6. Verfahren nach zumindest einem der vorhergehenden Ansprüche,
**dadurch gekennzeichnet, dass**
die Stelle (P1, P2, P5) und die an der Stelle (P1, P2, P5) abzutragende Materialmenge derart errechnet werden, dass durch Abtragen der Materialmenge an der Stelle (P1, P2, P5) eine möglichst große Korrektur der Unwucht erreicht wird.

7. Verfahren nach zumindest einem der vorhergehenden Ansprüche,
**dadurch gekennzeichnet, dass**
die Stelle (P1, P2, P5) unter der Bedingung errechnet wird, dass sie in einer vorgegebenen Wuchtebene (E1, E2, E5) liegt.

8. Verfahren nach zumindest einem der vorhergehenden Ansprüche,
**dadurch gekennzeichnet, dass**
die an der Stelle (P1, P2, P5) abzutragende Materialmenge derart errechnet wird, dass sich der Materialabtrag in Drehrichtung (D) des Rotors (149) gesehen über einen bestimmten Drehwinkelbereich (Δϕ) erstreckt, wobei der Drehwinkelbereich (Δϕ) bevorzugt im Bereich zwischen einem Drehwinkel von 0 Grad und 180 Grad, weiter bevorzugt zwischen einem Drehwinkel von 0 Grad und 90 Grad und noch weiter bevorzugt zwischen einem Drehwinkel von 3 oder 5 Grad und 60 Grad liegt.

9. Verfahren nach zumindest einem der vorhergehenden Ansprüche,
**dadurch gekennzeichnet, dass**
ein System zur Strahllenkung (310, 312, 318) vorgesehen ist, mittels dem der Strahl (304) auf die Stelle (P1, P2, P5) gelenkt wird.

10. Vakuumpumpe (111), insbesondere Turbopumpe, Turbomolekularpumpe oder Seitenkanalpumpe, oder Rotationseinheit für eine Vakuumpumpe (111), insbesondere Turbopumpe, Turbomolekularpumpe oder Seitenkanalpumpe, mit einem Rotor (149), der gegenüber einem Stator der Vakuumpumpe (111) oder der Rotationseinheit um eine Rotationsachse (151) drehbar gelagert ist, wobei am Rotor (149) zur möglichst vollständigen Beseitigung oder zumindest zur Reduzierung einer Unwucht an wenigstens einer Stelle (P1, P2, P5) Material von dem Rotor (149) durch Beaufschlagung mit einem Strahl abgetragen ist, insbesondere durch Beaufschlagung mit einem Laser-, lonen- oder Elektronenstrahl;
**dadurch gekennzeichnet, dass**
die wenigstens eine Stelle (P1) an einer Schaufel (155) des Rotors (149) liegt, insbesondere an einer radial außenliegenden Oberfläche der Schaufel (155);
und/oder dass
die wenigstens eine Stelle (P5) an einer Oberseite einer äußeren Rotorscheibe (155) in einem vorgegebenen oder vorgebbaren radialen Abstand zur Rotationsachse (151) liegt;
und/oder dass
die wenigstens eine Stelle (P2) an einer Oberfläche einer Rotornabe (161) liegt, an welcher wenigstens eine Holweckrotorhülse (163) angeordnet ist.

## Claims

1. A method of balancing a rotor (149) of a vacuum pump (111), in particular a turbopump, a turbomolecular pump or a side channel pump, or a rotor (149) of a rotation unit for a vacuum pump (111), in particular a turbopump, a turbomolecular pump or a side channel pump,
wherein the rotor (149) is rotatably supported about an axis of rotation (151) with respect to a stator of the vacuum pump (111) or of the rotation unit,
wherein the method comprises:
- measuring an imbalance of the rotor (149) when the rotor (149) rotates about the axis of rotation (151); and
- applying a beam (304), in particular a laser beam, an ion beam or an electron beam, to the rotor (149) at at least one position (P1, P2, P5), which is calculated in dependence on the measured imbalance, such that material is removed from the rotor (149) by means of the beam (304) to eliminate the imbalance as completely as possible or at least to reduce it,
**characterized in that**
the at least one position (P1) is disposed at a blade (155) of the rotor (149), in particular at a radially outwardly disposed surface of the blade (155); and/or **in that**
the at least one position (P5) is disposed at an upper side of an outer rotor disk (155) at a predefined or predefinable radial spacing from the axis of rotation (151); and/or **in that**
the at least one position (P2) is disposed at a surface of a rotor hub (161) at which at least one Holweck rotor sleeve (163) is arranged.

2. A method in accordance with claim 1,
**characterized in that**
the rotor (149) is brought to at least one defined rotational speed for the measurement of the imbalance and the deflection of the rotor (149) is measured, preferably at at least two points of the rotor surface disposed axially offset from one another - with respect to the axis of rotation -, in dependence on an angle of rotation of the rotor (149); and
**in that** the position (P1, P2, P5) and/or the quantity of material to be removed at the position (P1, P2, P5) and/or beam parameters related to the position and/or to the quantity of material to be removed is/are calculated in dependence on the imbalance.

3. A method in accordance with claim 1 or claim 2,
**characterized in that**
the rotor (149) is acted on by the beam (304) at the calculated position (P1, P2, P5) when the rotor (149) rotates.

4. A method in accordance with at least one of the preceding claims,
**characterized in that**
the rotor (149) is balanced under vacuum and/or the rotor (149) installed into the vacuum pump (111) is balanced.

5. A method in accordance with at least one of the preceding claims,
**characterized in that**
the position (P1, P2, P5) is calculated such that it has as large as possible a radial spacing from the axis of rotation (151).

6. A method in accordance with at least one of the preceding claims,
**characterized in that**
the position (P1, P2, P5) and the quantity of material to be removed at the position (P1, P2, P5) are calculated such that as large as possible a correction of the imbalance is achieved by removing the quantity of material at the position (P1, P2, P5).

7. A method in accordance with at least one of the preceding claims,
**characterized in that**
the position (P1, P2, P5) is calculated under the condition that it is disposed in a predefined balancing plane (E1, E2, E5).

8. A method in accordance with at least one of the preceding claims,
**characterized in that**
the quantity of material to be removed at the position (P1, P2, P5) is calculated such that the material removal extends over a specific rotary angle range (Δϕ), viewed in the direction of rotation (D) of the rotor (149), with the rotary angle range (Δϕ) preferably being in a range between an angle of rotation of 0 degrees and 180 degrees, further preferably between an angle of rotation of 0 degrees and 90 degrees, and still further preferably between an angle of rotation of 3 or 5 degrees and 60 degrees.

9. A method in accordance with at least one of the preceding claims,
**characterized in that**
a system for beam direction (310, 312, 318) is provided by means of which the beam (304) is directed to the position (P1, P2, P5).

10. A vacuum pump (111), in particular a turbopump, a turbomolecular pump or a side channel pump, or a rotation unit for a vacuum pump (111), in particular a turbopump, a turbomolecular pump or a side channel pump, comprising a rotor (149) which is rotatably supported about an axis of rotation (151) with respect to a stator of the vacuum pump (111) or of the rotation unit, wherein, at the rotor (149), material is removed from the rotor (149) at at least one position (P1, P2, P5) by the application of a beam (304), in particular by the application of a laser beam, an ion beam or an electron beam, to eliminate an imbalance as completely as possible or at least to reduce it,
**characterized in that**
the at least one position (P1) is disposed at a blade (155) of the rotor (149), in particular at a radially outwardly disposed surface of the blade (155); and/or **in that**
the at least one position (P5) is disposed at an upper side of an outer rotor disk (155) at a predefined or predefinable radial spacing from the axis of rotation (151); and/or **in that**
the at least one position (P2) is disposed at a surface of a rotor hub (161) at which at least one Holweck rotor sleeve (163) is arranged.

## Revendications

1. Procédé d'équilibrage d'un rotor (149) d'une pompe à vide (111), en particulier d'une turbopompe, d'une pompe turbomoléculaire ou d'une pompe à canal latéral, ou d'un rotor (149) d'une unité rotative pour une pompe à vide (111), en particulier pour une turbopompe, une pompe turbomoléculaire ou pour une pompe à canal latéral,
dans lequel
le rotor (149) est monté mobile en rotation autour d'un axe de rotation (151) par rapport à un stator de la pompe à vide (111) ou de l'unité rotative,
le procédé consistant à :
- mesurer un balourd du rotor (149) alors que le rotor (149) tourne autour de l'axe de rotation (151) ; et
- solliciter le rotor (149) par un faisceau (304), en particulier par un faisceau laser, un faisceau d'ions ou un faisceau d'électrons, à au moins un emplacement (P1, P2, P5) calculé en fonction du balourd mesuré, de manière à enlever de la matière du rotor (149) à l'aide du faisceau (304) en vue d'éliminer, si possible complètement, le balourd ou au moins de le réduire ;
**caractérisé en ce que**
ledit au moins un emplacement (P1) se situe sur une aube (155) du rotor (149), en particulier sur une surface radialement extérieure de l'aube (155) ; et/ou **en ce que**
ledit au moins un emplacement (P5) se situe sur une face supérieure d'un disque de rotor extérieur (155) à une distance radiale prédéfinie ou prédéfinissable par rapport à l'axe de rotation (151) ; et/ou **en ce que**
ledit au moins un emplacement (P2) se situe sur une surface d'un moyeu de rotor (161) sur laquelle est disposé au moins manchon de rotor (163) du type Holweck.

2. Procédé selon la revendication 1,
**caractérisé en ce que**
pour mesurer le balourd, le rotor (149) est amené à au moins une vitesse de rotation définie, et la déviation du rotor (149) est mesurée de préférence à au moins deux points de la surface de rotor qui sont décalés axialement l'un de l'autre par rapport à l'axe de rotation, en fonction d'un angle de rotation du rotor (149), et
il est prévu de calculer, en fonction du balourd, l'emplacement (P1, P2, P5) et/ou la quantité de matière à enlever à l'emplacement (P1, P2, P5) et/ou les paramètres du faisceau concernant l'emplacement et/ou la quantité de matière à enlever.

3. Procédé selon la revendication 1 ou 2,
**caractérisé en ce que**
le rotor (149) est sollicité par le faisceau (304) à l'emplacement calculé (P1, P2, P5), alors que le rotor (149) est en rotation.

4. Procédé selon l'une au moins des revendications précédentes,
**caractérisé en ce que**
le rotor (149) est équilibré sous vide et/ou le rotor (149) est équilibré en étant installé dans la pompe à vide (111).

5. Procédé selon l'une au moins des revendications précédentes,
**caractérisé en ce que**
l'emplacement (P1, P2, P5) est calculé de manière à avoir la plus grande distance radiale possible par rapport à l'axe de rotation (151).

6. Procédé selon l'une au moins des revendications précédentes,
**caractérisé en ce que**
l'emplacement (P1, P2, P5) et la quantité de matière à enlever à l'emplacement (P1, P2, P5) sont calculés de manière à obtenir la plus grande correction possible du balourd par enlèvement de la quantité de matière à l'emplacement (P1, P2, P5).

7. Procédé selon l'une au moins des revendications précédentes,
**caractérisé en ce que**
l'emplacement (P1, P2, P5) est calculé à condition qu'il se trouve dans un plan d'équilibrage donné (E1, E2, E5).

8. Procédé selon l'une au moins des revendications précédentes,
**caractérisé en ce que**
la quantité de matière à enlever à l'emplacement (P1, P2, P5) est calculée de telle sorte que l'enlèvement de matière, vu dans la direction de rotation (D) du rotor (149), s'étende sur une plage d'angle de rotation déterminée (Δϕ), la plage d'angle de rotation (Δϕ) étant de préférence comprise entre un angle de rotation de 0 degré et 180 degrés, de préférence encore entre un angle de rotation de 0 degré et 90 degrés, et de manière encore plus préférée entre un angle de rotation de 3 ou 5 degrés et 60 degrés.

9. Procédé selon l'une au moins des revendications précédentes,
**caractérisé en ce que**
il est prévu un système de guidage de faisceau (310, 312, 318) pour diriger le faisceau (304) sur l'emplacement (P1, P2, P5).

10. Pompe à vide (111), en particulier turbopompe, pompe turbomoléculaire ou pompe à canal latéral, ou unité rotative pour une pompe à vide (111), en particulier pour une turbopompe, une pompe turbomoléculaire ou pour une pompe à canal latéral, comportant un rotor (149) qui est monté mobile en rotation autour d'un axe de rotation (151) par rapport à un stator de la pompe à vide (111) ou de l'unité rotative,
dans laquelle
au niveau du rotor (149), de la matière est enlevée du rotor (149) par sollicitation avec un faisceau, en particulier par sollicitation avec un faisceau laser, un faisceau d'ions ou un faisceau d'électrons, à au moins un emplacement (P1, P2, P5), en vue d'éliminer, si possible complètement, un balourd ou au moins de le réduire ;
**caractérisée en ce que**
ledit au moins un emplacement (P1) se situe sur une aube (155) du rotor (149), en particulier sur une surface radialement extérieure de l'aube (155) ; et/ou **en ce que**
ledit au moins un emplacement (P5) se situe sur une face supérieure d'un disque de rotor extérieur (155) à une distance radiale prédéfinie ou prédéfinissable par rapport à l'axe de rotation (151) ; et/ou **en ce que**
ledit au moins un emplacement (P2) se situe sur une surface d'un moyeu de rotor (161) sur laquelle est disposé au moins manchon de rotor (163) du type Holweck.
